# EUROPÄISCHE PATENTSCHRIFT

(11) **EP 4 153 899 B1**
(45) Veröffentlichungstag und Bekanntmachung des Hinweises auf die Patenterteilung: **22.10.2025**
(21) Anmeldenummer: 21727122.0
(22) Anmeldetag: 18.05.2021
(51) Int. Cl.: F17C 3/02

(54) **BRENNGASVERSORGUNGSSYSTEM UND VERFAHREN ZUM VERSORGEN EINES HOCHDRUCK-GASEINSPRITZMOTORS MIT BRENNGAS**
FUEL GAS SUPPLY SYSTEM AND METHOD FOR SUPPLYING FUEL GAS TO A HIGH PRESSURE GAS INJECTION ENGINE
SYSTÈME D'ALIMENTATION EN GAZ DE COMBUSTION ET PROCÉDÉ D'ALIMENTATION D'UN MOTEUR D'INJECTION DE GAZ HAUTE PRESSION EN GAZ DE COMBUSTION

(30) Priorität: 19.05.2020 EP 20175575; 20.05.2020 EP 20175873
(43) Veröffentlichungstag der Anmeldung: 29.03.2023
(73) Patentinhaber: Burckhardt Compression AG, 8404 Winterthur (CH)
(72) Erfinder: SCHROTH, Roman, 8400 Winterthur (CH)
(74) Vertreter: Hepp Wenger Ryffel AG
(86) Internationale Anmeldenummer: PCT/EP2021/063141
(87) Internationale Veröffentlichungsnummer: WO 2021/233915

(56) Entgegenhaltungen:
- DE-A1- 102007 042 158
- JP-A- 2005 186 815
- JP-A- 2010 223 424
- JP-A- 2015 194 133
- KR-A- 20180 078 584
- KR-B1- 100 726 290
- US-A1- 2016 178 128
- US-A1- 2019 323 659

## Beschreibung

Die Erfindung betrifft ein Brenngasversorgungssystem. Die Erfindung betrifft weiter ein Verfahren zum Versorgen eines Hochdruck-Gaseinspritzmotors mit Brenngas.

### Stand der Technik

Erdgas ist ein Energieträger, der zunehmend an Bedeutung gewinnt. In der Handelsschifffahrt wird Erdgas zunehmend als alternativer Kraftstoff verwendet, um die neu geltenden Anforderungen an die Schifffahrtsindustrie bezüglich Abgasreinheit und Treibhausgasreduzierung zu erfüllen. Das als Kraftstoff verwendete Erdgas wird auf den Schiffen üblicherweise in flüssiger Form als Flüssigerdgas, auf Englisch "Liquefied Natural Gas" oder abgekürzt LNG, und in LNG-Tanks bei ungefähr atmosphärischem Druck und einer Temperatur von etwa -163°C gespeichert. Auf Grund der niedrigen Siedetemperatur des Flüssigerdgases von etwa -162°C bei atmosphärischem Druck wird durch die von Aussen auf die LNG- Tanks einwirkende Wärme kontinuierlich flüssiges Gas verdampft, das sich oben im LNG-Tank als Abdampfgas, auf Englisch "Boil Off Gas" oder abgekürzt BOG, ansammelt, was einen Druckanstieg im LNG-Tank zur Folge hat. Um diesem Druckanstieg entgegenzuwirken ist es bekannt, eine BOG-Rückverflüssigungs-anlage vorzusehen, welche das Abdampfgas verflüssigt und als Flüssiggas wieder dem LNG-Tank zuführt. Eine weitere Möglichkeit besteht darin das Abdampfgas direkt als Schiffsantriebskraftstoff zu verwenden. Dazu wird Erdgas auf einen hohen Druck im Bereich von beispielsweise 150 bis 300 bara oder 400 bara zu Hochdruckbrenngas verdichtet und einem Hochdruck-Gaseinspritzmotor zugeleitet. Ein solcher Motor wird beispielsweise von der Firma MAN-SE unter der Bezeichnung ME-GI-Motor vertrieben. Ein solcher Motor bildet vorzugsweise das Hauptantriebssystem eines Handelsschiffs.

Das Dokument KR 10 2011 0030149 offenbart ein Brenngasversorgungssystem zum Versorgen eines Hochdruck-Gaseinspritzmotors eines Flüssiggastankschiffs mit Brenngas. Dieses System ist einerseits in der Lage, im LNG-Tank gespeichertes Erdgas auf einen derart hohen Druck zu verdichten, dass dieses dem Hochdruck-Gaseinspritzmotor zugeleitet werden kann, und ist andererseits in der Lage einen übermässigen Druckanstieg im LNG-Tank zu verhindern, indem, falls erforderlich, Abdampfgas rückverflüssigt wird und anschliessend dem Hochdruck-Gaseinspritzmotor und/oder dem LNG-Tank zugeführt wird. Das im Dokument KR1020110030149 offenbarte Brenngasversorgungssystem weist die Nachteile auf, dass dieses relativ aufwändig und teuer ist und einen externen Kühlkreislauf zur Rückverflüssigung nutzt, und dass zu dessen Betrieb ein erheblicher Energieaufwand erforderlich ist.

Das Dokument KR 100 726 290 zeigt ein Verfahren zum Recyceln von überschüssigem Verdampfungsgas, indem die Verflüssigung, Wiederverflüssigung oder Verwendung des Verdampfungsgases angesteuert wird. Das Verfahren umfasst die Schritte des Verflüssigens des Verdampfungsgases, des selektiven Rückführens von verflüssigtem Gas zu einem Gasspeichertank oder des selektiven Zuführens des verflüssigten Gases zu einem Flüssiggasverdampfer durch erste und zweite Steuerventile. Eine bestimmte Menge des verflüssigten Gases wird in dem Flüssiggasverdampfer verdampft, sodass er für die Zufuhr als Kraftstoff geeignet ist, durch Steuern der Temperatur, des Drucks und des Flusses. Weiter umfasst das Verfahren das Zuführen des verdampften Gases als Kraftstoff eines Antriebssystems und das Abrufen des verflüssigten Verdampfungsgases oder Öffnen/Schliessen des ersten, zweiten, dritten und vierten Ventils zum Verbrennen einer kleinen Menge des Verdampfungsgases. In diesem System wird die spezifische Wärmekapazität von eingespritztem unterkühltem LNG genutzt um BOG rückzuverflüssigen. Es handelt sich jedoch um ein Niederdrucksystem und eignet sich nicht zum Versorgen eines Hochdruck-Gaseinspritzmotors mit Brenngas.

### Darstellung der Erfindung

Aufgabe der Erfindung ist es ein wirtschaftlich vorteilhafteres Brenngasversorgungssystem zu bilden. Zudem ist es Aufgabe der Erfindung ein wirtschaftlich vorteilhafteres Verfahren zum Versorgen eines Hochdruck-Gaseinspritzmotors mit Brenngas zu bilden. Diese Aufgabe wird gelöst mit einem Brenngasversorgungssystem aufweisend die Merkmale von Anspruch 1. Die abhängigen Ansprüche 2 bis 10 betreffen weitere vorteilhafte Ausgestaltungen. Die Aufgabe wird weiter gelöst mit einem Verfahren aufweisend die Merkmale von Anspruch 11. Die abhängigen Ansprüche 12 bis 14 betreffen weitere, vorteilhafte Verfahrensschritte.

Die Aufgabe wird insbesondere gelöst mit einem Brenngasversorgungssystem zum Versorgen eines Hochdruck-Gaseinspritzmotors mit in einem Flüssiggastank, insbesondere LNG-Tank, gespeicherten Gas, umfassend einen Kondensator , umfassend einen Verdichter, der Fluid leitend mit dem Flüssiggastank verbindbar ist, um Abdampfgas aus dem Flüssiggastank zuzuführen, wobei der Verdichter stromabwärts über eine Einleitung Fluid leitend mit einem Innenraum des Kondensators verbunden ist, um das Abdampfgas in den Innenraum einzuleiten, sowie umfassend einen Kondensationskerngenerator, wobei der Kondensationskerngenerator derart ausgestaltet ist, dass dieser Flüssiggaströpfchen erzeugt, die als Kondensationskerne dienen, wobei der Kondensationskerngenerator die Kondensationskerne in den Innenraum einführt, um über die Kondensationskerne eine Kondensation des eingeleiteten Abdampfgases zu fördern, sodass sich daraus Flüssiggas ausbildet, und wobei das sich im Kondensator gebildete Flüssiggas dem Flüssiggastank zugeleitet werden kann, wobei das System weiterhin eine Hochdruckpumpe umfasst, welche Fluid leitend mit dem Flüssiggastank verbindbar ist, um Flüssiggas (F1)aus dem Flüssiggastank zuzuführen und dieses zu einem Hochdruckflüssiggas zu verdichten, wobei in dem Kondensator ein Hochdruckwärmetauscher angeordnet ist, wobei ein Hochdruckverdampfer bereitgestellt ist, der über den Hochdruckwärmetauscher Fluid leitend mit der Hochdruckpumpe verbunden und stromabwärts des Kondensators angeordnet ist, wobei der Hochdruckverdampfer das Hochdruckflüssiggas in ein Hochdruckbrenngas wandelt und das Hochdruckbrenngas nach dem Hochdruckverdampfer dem Hochdruck-Gaseinspritzmotor zugeleitet ist, und wobei der Kondensationskerngenerator stromaufwärts Fluid leitend mit der Hochdruckpumpe verbunden ist, wobei das sich im Kondensator gebildete Flüssiggas zusätzlich der Hochdruckpumpe zugeleitet ist, wobei der Kondensationskerngenerator derart ausgestaltet ist, dass dieser aus dem Hochdruckflüssiggas Flüssiggaströpfchen erzeugt, die als Kondensationskerne dienen.

Die Aufgabe wird insbesondere gelöst mit einem Verfahren zum Versorgen eines Hochdruck-Gaseinspritzmotors mit Gas, das in einem Flüssiggastank, insbesondere LNG-Tank, teilweise als Flüssiggas und teilweise als Abdampfgas gespeichert ist, indem das Abdampfgas aus dem Flüssiggastank einem Verdichter zugeführt und anschliessend in einen Kondensator eingeleitet wird, wobei in einem Kondensationskerngenerator aus Hochdruckflüssiggas ein Strom von Kondensationskernen in Form von Flüssiggaströpfchen erzeugt wird, welche im Kondensator dem eingeleiteten Abdampfgas zugeleitet werden, um durch die Flüssiggaströpfchen eine Kondensation des Abdampfgases zu Flüssiggas zu fördern, und indem das im Kondensator gebildete Flüssiggas dem Flüssiggastank zugeleitet wird, wobei das Flüssiggas aus dem Flüssiggastank einer Hochdruckpumpe zugeführt wird und von dieser zu einem Hochdruckflüssiggas verdichtet wird, wobei das Hochdruckflüssiggas anschliessend einem in einem Kondensator angeordneten Hochdruckwärmetauscher und nachfolgend einem Hochdruckverdampfer zugeführt wird, wobei das Hochdruckflüssiggas im Hochdruckverdampfer in ein Hochdruckbrenngas umgewandelt wird, sodass ein unter Hochdruck stehendes Brenngas erzeugt wird, welches dem Hochdruck-Gaseinspritzmotor zugeleitet wird, und wobei das im Kondensator gebildete Flüssiggas der Hochdruckpumpe zugeleitet und der Strom von Kondensationskernen in Form von Flüssiggaströpfchen aus Hochdruckflüssiggas erzeugt wird.

Das erfindungsgemässe Brenngasversorgungssystem verwendet einen Kondensator zum Kondensieren von Abdampfgase zu Flüssiggas. Dazu werden mit Hilfe eines Kondensationskerngenerators aus Flüssiggas Kondensationskerne erzeugt, welche innerhalb des Kondensators mit sich in einem Innenraum des Kondensators befindlichem Abdampfgas in Kontakt kommen, sodass das Abdampfgas an den Kondensationskernen anhaftet und dabei zu Flüssiggas kondensiert. Die Kondensationskerne werden vorzugsweise mit Hilfe von Hochdruckflüssiggas erzeugt, das durch eine Düse, insbesondere eine Spraydüse geleitet wird, sodass mit Hilfe der Düse eine Vielzahl von Flüssigkeitströpfchen erzeugt werden, die als Kondensationskerne dienten. Das erfindungsgemässe Brenngasversorgungssystem weist die Vorteile auf, dass die Kondensation bei einem relativ tiefen Druck stattfindet, für LNG beispielsweise bei einem Druck im Bereich von unter 50 bara, vorzugsweise in einem Bereich von 20 bis 30 bara, und besonders bevorzugt in einem Bereich 10 bis 20 bara, und dass ein Kondensat bzw. Flüssiggas mit relativ tiefer Temperatur erzeugt wird, beispielsweise mit einer Temperatur von unter -120°C, und vorzugsweise im Bereich -120°C und -150°C. Ein Druck unter 20 bara weist den Vorteil auf, dass zum Verdichten des Abdampfgases F2 im Verdichter 9 ein zweistufiger Verdichter genügt. Für einen Druck im Bereich zwischen 40 und 50 bara ist ein dreistufiger Verdichter 9 erforderlich. Aus Kostengründen wird ein zweistufiger Verdichter 9 bzw. ein Verdichten des Abdampfgases F2 in einem Bereich von 10 bis 20 bara besonders bevorzugt. Der relativ tiefe Druck im Innenraum des Kondensators, der während der Kondensation anliegt, erfordert eine tiefere spezifische Enthalpie für den stromaufwärts des Kondensators stattfindenden Verdichtungsprozess des Abdampfgases, welcher stattfindet, bevor das Abdampfgas dem Kondensator zugeleitet wird. Dies ergibt den Vorteil, dass ein kleinerer und somit kostengünstigerer Verdichter für diesen Verdichtungsprozess genügt. Die tiefere Temperatur des Kondensats führt, falls das Kondensat anschliessend einer Hochdruckpumpe zugeführt wird, zudem zu einem reduzierten Abdampfen in der Hochdruckpumpe, und erhöht deshalb die mittlere Zeit zwischen den Wartungen der Hochdruckpumpe, auch als MTBO bezeichnet, sodass das erfindungsgemässe Brenngasversorgungssystem kostengünstiger und zuverlässiger betreibbar ist.

Unter einer "Hochdruckpumpe" im Sinne der Erfindung wird insbesondere verstanden, eine Pumpe die Drucke von wenigstens 80 bara erzeugt, bevorzugt Drucke von 100 bis 400 bara erzeugt, typischerweise Drucke von 150 bis 300 bara erzeugt. Es kann sich um eine Verdrängermaschine, beispielsweise eine Kolbenpumpe handeln. Unter eine "Niederdruckpumpe" dagegen wird verstanden eine Pumpe, beispielsweise eine Strömungsmaschine, die Drucke von unter 80 bara erzeugt, typischerweise Drucke von 5 bis 25 bara.

Es ist bevorzugt, dass der Flüssiggastank ein LNG-Tank ist und das Brenngas Erdgas, insbesondere Methan. Denkbar sind jedoch auch andere Brenngase, insbesondere Ethylen, Ethan oder Ammoniak. Dann müsste das System und das Verfahren unter angepassten Druck- und Temperaturbedingungen betrieben werden. Im Falle von Ammoniak als Brennstoff sollte beispielsweise die Hochdruckpumpe einen Druck von 300 bis 400 bara erzeugen. Ein solches Flüssiggas könnte in einem Kondensationsabschnitt eines Kondensators aufweisend eine Temperatur von -10 bis +10°C und einen Druck von 5 bis 10 bara als Flüssiggaströpfchen in den Innenraum des Kondensators eingefürt werden. Andere Anpassungen am System, die für das Funktionieren notwendig wären? Materialien? Abläufe?

In einer bevorzugten Ausführungsform reicht es aus, wenn mittels Kondensationskerngenerator nur wenig Flüssiggas eingespritzt wird, im Vergleich zum Massenstrom des zu kondensierenden Gasstroms. Insbesondere ist es ausreichend, wenn der Massenstrom von Flüssiggas (F1) im Kondensationskerngenerator 1 bis 5 % des Massenstroms des zu kondensierenden Gases (F2) beträgt.

Das erfindungsgemässe Brenngasversorgungssystem weist somit den Vorteil auf, dass der Rückverflüssigungsdruck und die Rückverflüssigungstemperatur des zu verflüssigenden Abdampfgases beziehungsweise das dabei erzeugen Flüssiggases reduziert ist.

Das erfindungsgemässe Brenngasversorgungssystem weist den weiteren Vorteil auf, dass die stromaufwärts des Kondensators erfolgende Verdichtung des Abdampfgases eine reduzierte spezifische Enthalpie erfordert, sodass dieser Verdichter kostengünstiger ausgestaltet werden kann, und für diesen Verdichter zudem reduzierte Betriebskosten (Englisch OPEX, "Operational Expenditures"), und insbesondere reduzierte Energiekosten anfallen.

Das erfindungsgemässe Brenngasversorgungssystem weist den weiteren Vorteil auf, dass durch die verbesserte Kondensation ein kleineres Kondensatordesign erforderlich ist, was die Investitionsausgaben (Englisch CAPEX, "Capital Expenditure") reduziert. Bei dem erfindungsgemässen Wärmetauscher handelt es sich um einen Wärmetauscher basierend auf indirekter Wärmeübertragung, d.h. die Stroffströme sind durch eine wärmedurchlässige Wand getrennt. Dadurch lässt sich ein Hochdruckwärmetauscher realisieren, bei dem das Kühlmittel dem Kühlabschnitt mit einem hohen Druck (z.B. 80 bis 300 bara) zugeführt wird und diesen auch mit einem im Wesentlichen gleichen Druck wieder verlässt. Durch die verbesserte Kondensation genügt ein Hochdruckwärmetauscher mit geringerer Wärmeübertragungsfläche, sodass innerhalb des Kondensators ein kleinerer Hochdruckwärmetauscher und dadurch ein kleinerer Kondensator erforderlich sind.

Das erfindungsgemässe Brenngasversorgungssystem weist den weiteren Vorteil auf, dass durch die reduzierte, tiefere Temperatur des aus dem Abdampfgas kondensierten Flüssiggas die Leistung der Hochdruckpumpe verbessert wird.

Vorzugsweise wird aus oder nach der Hochdruckpumpe ein Seitenstrom von Hochdruckflüssiggas entnommen. Vorteilhafterweise wird dieser Seitenstrom von Hochdruckflüssiggas in einem Wärmetauscher gekühlt, wobei diesem Wärmetauscher Abdampfgas aus dem Flüssiggastank zugeleitet wird. Vorteilhafterweise umfasst der Kondensator zum Kondensieren des Abdampfgases den Kondensationskerngenerator beziehungsweise ein Injektorsystem zur Tröpfchenerzeugung, dem das unterkühlte Hochdruckflüssiggas zugeleitet wird, um Kondensationskerne bzw. Aerosoltröpfchen zu erzeugen und diese in den Innenraum des Kondensators einzuleiten beziehungsweise diese im Innenraum des Kondensators zu versprühen, wobei die Kondensationskerne zur verbesserten Kondensation des Abdampfgases dienen. Das Einspritzen des LNG erfolgt mit speziellen Düsen, welche die richtige Tropfengrösse sicherstellen, so dass diese LNG Tropfen als Kondensationskeime dienen können. Genutzt wird dabei ein physikalischer Oberflächeneffekt, ein Krümmungseffekt, oder auch Grenzflächeneffekt, auch bekannt als Gibbs-Thomson-Effekt. Bekannt sind die technischen Grundlagen aus den Fachgebieten der Nanotechnologie und der Aerosoltechnik. Es ist bevorzugt, wenn die Düse eine Hochdruckdüse ist, besonders bevorzugt eine Hochdruckdüse mit Düsendurchmesser im Bereich von 1 bis 1000 µm, bevorzugt 5 bis 500 µm. Eine solche Hochdruckdüse ist geeignet Tröpfchen im relevanten Bereich zu erzeugen, typischerweise Tröpfchen mit einem Durchmesser von 100 nm bis 100 µm, bevorzugt 500 nm bis 50µm.

In einer bevorzugten Ausführungsform erfolgt die Einleitung des Abdampfgases (F2) von Oben in den Kondensator, wobei sich der Hochdruckwärmetauscher in vertikaler Richtung innerhalb des Kondensators erstreckt und der Hochdruckwärmetauscher derart angeordnet ist, dass das Hochdruckflüssiggas in Hochdruckwärmetauscher von unten nach oben strömt. Damit wird der natürliche Temperaturgradient im Innenraum des Kondensators unterstützt. Bevorzugt ist der Kondensationskerngenerator derart angeordnet, dass vom Kondensationskerngenerator erzeugte Kondensationskerne in einem Kondensationsabschnitt in den Innenraum des Kondensators eingeleitet sind, in welchem der Innenraum eine Kondensationstemperatur aufweist. Beispielsweise liegt bei einem Druck von 17 bara die Siedetemperatur von Erdgas bei etwa -110°C. Um eine vollständige Rückverflüssigung des Abdampfgases F2 im Kondensator zu erreichen, müsste die tatsächliche Kondensationstemperatur etwa -120°C betragen. Bevorzugt ist der Kondensationskerngenerator derart angeordnet, dass die Kondensationskerne in einer in Flussrichtung des Flüssiggases (F1) ersten Hälfte, bevorzugt einem in Flussrichtung des Flüssiggases (F1) ersten Drittel der Kühlleitung des Hochdruckwärmetauschers in den Innenraum des Kondensators eintreten.

Die Erfindung wird nachfolgend an Hand mehrerer Ausführungsbeispiele im Detail beschrieben.

### Kurze Beschreibung der Zeichnungen

Die zur Erläuterung der Ausführungsbeispiele verwendeten Zeichnungen zeigen:
- Fig. 1: schematisch ein erstes Ausführungsbeispiel eines Brenngasversorgungssystems;
- Fig. 2: schematisch ein zweites Ausführungsbeispiel eines Brenngasversorgungssystems;
- Fig. 3: schematisch ein drittes Ausführungsbeispiel eines Brenngasversorgungssystems;
- Fig. 4: schematisch ein viertes Ausführungsbeispiel eines Brenngasversorgungssystems;
- Fig. 5: schematisch ein fünftes Ausführungsbeispiel eines Brenngasversorgungssystems;
- Fig. 6: schematisch einen Kondensator.

Grundsätzlich sind in den Zeichnungen gleiche Teile mit gleichen Bezugszeichen versehen.

### Wege zur Ausführung der Erfindung

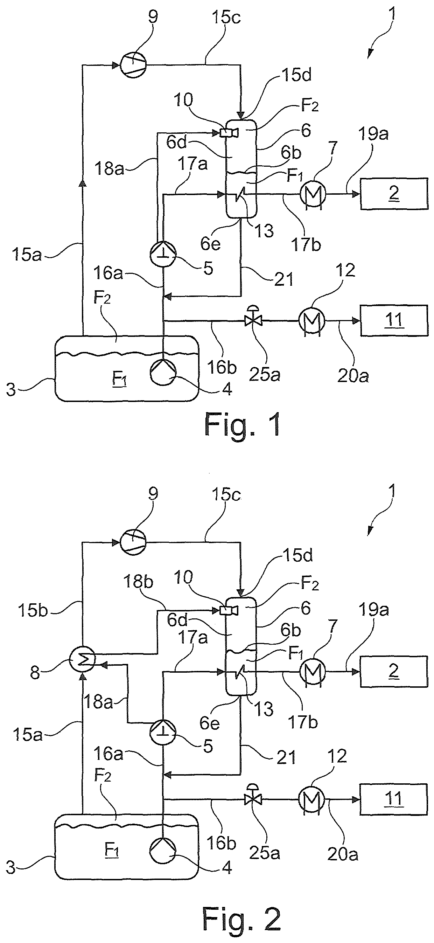

Fig. 1 zeigt ein Brenngasversorgungssystem 1 zum Versorgen eines Hochdruck-Gaseinspritzmotors 2, vorzugsweise eines ME-GI-Motors, mit Brenngas, vorzugsweise Methan. Das Brenngas ist in einem LNG-Tank 3 gespeichert, teilweise in Form von Flüssiggas F1 und, auf Grund der im LNG-Tank 3 auftretenden Verdampfung des Flüssiggases F1, teilweise in Form von Abdampfgas F2. Dieses Abdampfgas F2 wird auch als BOG oder NBOG (Natural Boil-Off Gas) bezeichnet. Zur Versorgung des Hochdruck-Gaseinspritzmotors 2 mit Brenngas mit einem Druck im Bereich von beispielsweise 150 bis 300 bara, wird das sich im LNG-Tank 3 befindliche Flüssiggas F1 über eine Niederdruckpumpe 4 und eine Niederdruckfluidleitung 16a einer Hochdruckpumpe 5 zugeführt, welche den Druck des Flüssiggases F1 auf einen Hochdruck von beispielsweise zwischen 150 und 300 bara erhöht. Diese Hochdruckflüssiggas wird anschliessend über eine Hochdruckfluidleitungen 17a, einen Hochdruckwärmetauscher 13 und einer Hochdruckfluidleitung 17b einem Hochdruckverdampfer 7 zugeführt, welcher das Hochdruckflüssiggas zu einem gasförmigen bzw. superkritischen Hochdruckgas verdampft, wobei dieses Hochdruckgas, aufweisend im dargestellten Ausführungsbeispiel einen Druck von etwa 300 bara, dem Hochdruck-Gaseinspritzmotor 2 zugeführt wird. Das dargestellte Brenngasversorgungssystem 1 umfasst zudem einen Kondensator 6 mit einem Innenraum 6d, in welchem sich zumindest während des Betriebs des Brenngasversorgungsystems Flüssiggas F1 und Abdampfgas F2 befindet. Das Abdampfgas F2 ist über eine Gasleitung 15a vom LNG-Tank 3 einem Verdichter 9 zugeleitet, welcher das Abdampfgas F2 verdichtet, wobei dieses verdichtete Abdampfgas F2 über eine Gasleitung 15c und über eine nachfolgende Einleitung 15d in den Innenraum 6d des Kondensators 6 eingeleitet wird. Das Brenngasversorgungssystem 1 umfasst zudem einen Kondensationskerngenerator 10, dem von der Hochdruckpumpe 5 über einen Seitenstrom bzw. über die Hochdruckfluidleitung 18a Hochdruckflüssiggas zugeleitet ist. Der Kondensationskerngenerator 10 und die Einleitung 15d sind derart im Kondensator 6 zusammenwirkend angeordnet, dass die vom Kondensationskerngenerator 10 erzeugten und in den Innenraum 6d versprühten, flüssigen Kondensationskerne 10a bzw. Flüssiggaströpfchen, im Kondensator 6 eine Kondensation des zugeleiteten Abdampfgases F2 fördern, sodass sich Abdampfgas F2 am Kondensationskern anlagert und zu Flüssiggas F1 kondensiert, und sich danach im unteren Bereich des Kondensators 6 ansammelt.

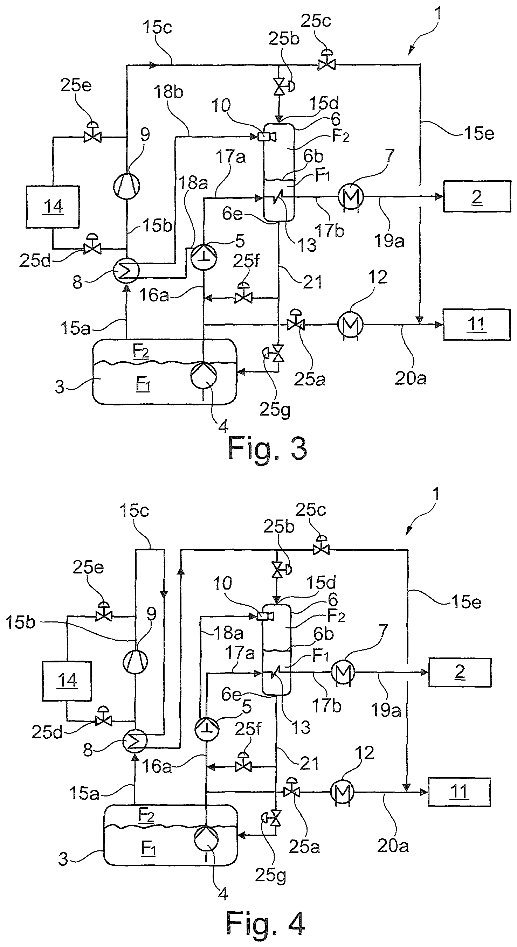

Dieses sich im Kondensator 6 ansammelnde Flüssiggas F1 wird über einen Auslass 6e und eine Rückführleitung 21 der Hochdruckpumpe 5 zugeführt, oder, wie in Figur 3 dargestellt, wahlweise der Hochdruckpumpe 5 und/oder dem LNG-Tank 3 zugeleitet. Der Hochdruckwärmetauscher 13 ist, wie in Figur 1 dargestellt, im bzw. innerhalb des Kondensators 6 angeordnet, um den Inhalt des Kondensators 6, insbesondere das sich darin befindliche Abdampfgas F2 durch indirekten Wärmeaustausch zu kühlen und ebenfalls zu kondensieren. Das durch den Wärmetauscher 13 strömende, überkritische Hochdruckflüssiggas hat somit die Funktion einer Wärmesenke. Der Verdichter 9 ist beispielsweise als ein Kolbenverdichter ausgestaltet, beispielsweise als ein Labyrinthkolbenverdichter, und beispielsweise als zweistufiger oder dreistufiger Kolbenverdichter, vorbei zumindest einer der Kolbenverdichter, vorzugsweise der erste stromabwärts des LNG-Tanks 3 angeordnete Kolbenverdichter, als Labyrinthkolbenverdichter ausgestaltet ist. Der Verdichter oder zumindest eine Verdichterstufe könnte jedoch auch als Turboverdichter oder in einer anderen Verdichtertechnologie ausgestaltet sein.

Optional umfasst das Brenngasversorgungssystem 1 zudem noch eine Niederdruckfluidleitung 16b und ein Ventil 25a, um zumindest einen Teilstrom des von der Niederdruckpumpe 4 geförderten Flüssiggases F1 einem Niederdruckverdampfer 12 zuzuführen, welcher das Flüssiggas F1 zu gasförmigem Niederdruckgas verdampft, aufweisend einen Druck im Bereich von beispielsweise 7 bis 9 bara. Dieses Niederdruckgas ist einem Niederdruckverbraucher 11 zugeleitet ist, beispielsweise einem Gas betriebenen Generator oder Boiler.

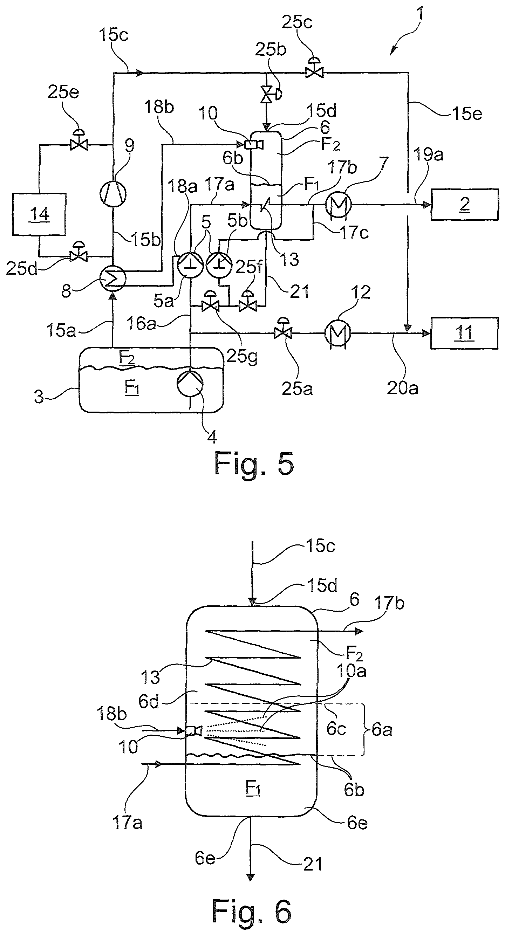

Figur 6 zeigt ein Ausführungsbeispiel eines Kondensators 6 im Detail, wie dieser im Brenngasversorgungssystem 1 gemäss Figur 1 verwendet werden könnte. Das Abdampfgas F2 wird über die Gasleitung 15c und die Einleitung 15d oben in den Innenraum 6d des Kondensators 6 einleitet. Ein Seitenstrom des Hochdruckflüssiggases wird über die Hochdruckleitung 18a und den Kondensationskerngenerator 10 in den Innenraum 6d des Kondensators 6 eingesprüht, unter Ausbildung einer Vielzahl von als Kondensationskerne dienenden Tropfen 10a. Eine Rückführleitung 21 mündet unten in den Innenraum des Kondensators 6, um das sich im unteren Bereich des Innenraums befindliche Flüssiggas F1 abzuführen. Der Hockdruckwärmetauscher 13 erstreckts sich im Innenraum 6d des Kondensators 6 vorzugsweise in vertikaler Richtung von unten noch oben, wobei das Hochdruckflüssiggas über die Hochdruckfluidleitung 17a zugeführt und über die Hochdruckfluidleitung 17b abgeführt wird. Vorteilhafterweise erstreckt sich der Hochdruckwärmetauscher 13 wie in Figur 4 dargestellt zum grössten Teil, beispielsweise zu 9/10, innerhalb desjenigen Teils des Innenraums 6d, in welchem sich das Abdampfgas F2 oder eine Mischung von Abdampfgas F2 und Tröpfchen von Flüssiggas F1 befindet.

Der Kondensator 6 kann während des Betriebs beispielsweise mit den nachfolgenden Verfahrenswerten betrieben werden. Das Hochdruckflüssiggas wird mit einem Druck von 300 bara dem Hochdruckwärmetauscher 13 zugeführt, und verlässt diesen mit im Wesentlichen denselben Druck wieder. Das Abdampfgas F1 wird mit einem Druck von 17 bara und einer Temperatur von +40°C über die Einleitung 15d von oben in den Innenraum 6d des Kondensators 6 eingeführt. Das innerhalb des Kondensators 6 ausgehend von der Einleitung 15d nach unten strömende Abdampfgas F1 wird durch den Hochdruckwärmetauscher 13 abgekühlt, sodass sich zwischen der Oberfläche 6b des Flüssiggases F1 und einem Grenzbereich 6c ein Kondensationsabschnitt 6a ausbildet, innerhalb welcher das Abdampfgas F2 eine Temperatur aufweist, welche, unter Berücksichtigung des im Innenraum 6d anliegenden Drucks, unterhalb der Verdampfungstemperatur von Flüssiggas F1 liegt. Die von dem Kondensationskerngenerator 10 erzeugten Kondensationskerne in Form von Flüssiggaströpfchen 10a werden vorzugsweise in den Kondensationsabschnitt 6a eingesprüht, damit das sich in diesem Abschnitt befindliche Abdampfgas F2 an diesen Kondensationskernen kondensiert und anschliessend über die Oberfläche 6b dem das Flüssiggas F1 enthaltenden Teilvolumen 6e des Kondensators 6 zugeleitet wird. Das Flüssiggas F1 weist im Teilvolumen 6e in dem hiermit beschriebenen Verfahrensbeispiel einen Druck von 17 bara und eine Temperatur von -120°C auf.

Das Verfahren zum Betrieb des Brenngasversorgungssystems 1 wird an Hand des nachfolgenden Ausführungsbeispiels im Detail erläutert. Im Gegensatz zu einem Flüssiggastankschiff, dessen Stauraum grösstenteils aus LNG-Tanks besteht, weist ein übliches Handelsschiff einen relativ kleinen LNG-Tank auf, da der Stauraum für zu transportierende Güter zur Verfügung steht. Der Hochdruck-Gaseinspritzmotor 2 eines solchen Handelsschiffs hat während der Fahrt einen Gasbedarf von beispielsweise etwa 10t / h. Im LNG-Tank des Handelsschiffs beträgt die Boil-off-Rate (BOR), daher die Menge an zu Abdampfgas F2 verdampftem Flüssiggas F1 beispielsweise etwa 800 kg / h. Das Brenngasversorgungssystem 1 hat einerseits die Aufgabe den Hochdruck-Gaseinspritzmotor 2 mit einer lastabhängig unterschiedlichen, jedoch genügend grossen Menge an Hochdruckbrenngas zu versorgen. Zudem hat das Brenngasversorgungsystem 1 die Aufgabe den Gasdruck im LNG-15 Tank zu überwachen und sicherzustellen, dass der Gasdruck einen vorgegebenen Wert nicht übersteigt. Zudem hat das Brenngasversorgungssystem 1 die Aufgabe sicherzustellen, dass das überschüssige, sich im LNG-Tank befindliche Abdampfgas ökonomisch sowie ökologisch vorteilhaft verwendet wird, und insbesondere zur Speisung des Hochdruck-Gaseinspritzmotors 2, und allenfalls zur Speisung eines Niederdruckverbrauchers 11 verwendet wird.

Das sich im LNG-Tank 3 befindliche Flüssiggas F1, gelagert unter etwa atmosphärischem Druck und einer Temperatur von etwa -163°C, wird mit Hilfe der Niederdruckpumpe 4 zur Hochdruckpumpe 5 gefördert, und dabei auf einen Druck von etwa 7 bara verdichtet, mit einer Temperatur von -150°C. Um den Hochdruck-Gaseinspritzmotor 2 mit genügend Hochdruckbrenngas zu versorgen wird das Flüssiggas F1 anschliessend in der Hochdruckpumpe 5 zu Hochdruckflüssiggas auf einen Druck von 300 bara verdichtet, bei einer Fördertemperatur von -150°C, und anschliessend im Hochdruckverdampfer 7 zu gasförmigem oder superkritischem Hochdruckbrenngas verdampft. Das derart erzeugte Hochdruckbrenngas wird dem Hochdruck-Gaseinspritzmotor 2 zugeführt. Die Menge des zugeführten Hochdruckbrenngases kann durch eine entsprechende Ansteuerung der Fördermenge der Hochdruckpumpe 5 und gegebenenfalls der Niederdruckpumpe 4 geregelt werden.

Das Abdampfgas F2 wird dem Tank 3 unter etwa atmosphärischem Druck und einer Temperatur von etwa -162°C entnommen und anschliessend in einem Verdichter 9 auf einen Druck von etwa 18 bara, mit einer Austrittstemperatur von + 40°C verdichtet. Das derart verdichtete Abdampfgas F2 wird vorzugsweise mit diesem Druck und dieser Temperatur in den Innenraum 6d des Kondensators 6 eingeleitet.

Wie in Figur 6 dargestellt strömt innerhalb des Kondensators 6 das sich im Hochdruckwärmetauscher 13 befindliche Hochdruckflüssiggas mit einem Druck von 300 bara und einer Fördertemperatur von -150°C nach oben, wogegen das verdichtete Abdampfgas F2 von Oben in den Innenraum 6d des Kondensators 6 eingeleitet wird, und im oberen Abschnitt des Kondensators 6 entlang des Hochdruckwärmetauschers 13 nach unten strömt, und das verdichtete Abdampfgas F2 somit im Gegenstrom bezüglich dem innerhalb des Hochdruckwärmetauschers 13 fliessende Hochdruckflüssiggas fliesst, wodurch das Abdampfgas F2 abgekühlt wird, und vorzugsweise auf seine Kondensationstemperatur abgekühlt wird. Bei einem Druck von 17 bara liegt die Siedetemperatur des Abdampfgases F1 bei etwa -110°C. Um eine vollständige Rückverflüssigung des Abdampfgases F2 im Kondensator 6 zu erreichen, muss der Hochdruckwärmetauscher 13 bzw. das darin fliessende Hochdruckgas ein ausreichendes Potential zur Übernahme der Enthalpie bei Temperaturen unter -110°C aufweisen. Unter Berücksichtigung einer notwendigen Übersättigung für die Kondensation bei 17bar wird die tatsächliche Kondensationstemperatur etwa 5 bis 10 K unter der Siedetemperatur bei 17bar a liegen, sodass die Kondensation etwa bei -120°C stattfindet.

Die -150°C, mit denen das überkritische Hochdruckgas bzw. das Hochdruckflüssiggas auf der Hochdruckseite in den Hochdruckwärmetauscher 13 eintritt, stehen für die Wärmeübertragung nicht direkt zur Verfügung, da für die Wärmeübertragung durch das überkritische Hochdruckgas und die Wand des Hochdruckwärmetauschers 13 mehrere Temperaturgradienten berücksichtigt werden müssen. Als erster Ansatz wird angenommen, dass die Wandtemperatur des Hochdruckwärmetauschers 13 auf der dem Abdampfgas F2 zugewandten Seite -145°C beträgt. Dies ermöglicht eine Enthalpieübertragung vom Abdampfgas F2 auf das überkritische Hochdruckgas bzw. das Hochdruckflüssiggas in einem Temperaturfenster von 25°K.

Um im Kondensator 6 die Effizienz der Rückverflüssigung von Abdampfgas F2 zu Flüssiggas F1 zu erhöhen, werden mit Hilfe eines Kondensationskerngenerators 10 als Kondensationskerne Flüssiggaströpfchen erzeugt, welche in den Innenraum 6d des Kondensators 6 eingespritzt werden. Dazu wird in einem Seitenstrom 18a ein Teil des von der Hochdruckpumpe 5 zu Hochdruckflüssiggas verdichteten Flüssiggases F1 dem Kondensationskerngenerator 10 zugeleitet, wobei das zugeleitete Hochdruckflüssiggas einen Druck von 300 bara und eine Temperatur von -150°C aufweist. Die im Kondensationskerngenerator 10 beispielsweise mit Hilfe zumindest einer Düse erzeugten Tröpfchen 10a werden in einen Kondensationsabschnitt 6a des Kondensator 6 eingeleitet, in welchem sich die Temperatur das Abdampfgases F2 bereits unter dessen Kondensationstemperatur von -110°C liegt. Die in den Kondensator 6 eintretenden Flüssiggaströpfchen 10a werden sind somit unterkühlt, da die Kondensationstemperatur des Abdampfgases F2 bei 17 bara 110°C beträgt.

Die unterkühlten Flüssiggaströpfchen 10a dienen als Kondensationskerne für das zu kondensierende Abdampfgas F2. Das heisst, jedes unterkühlte Flüssiggaströpfchen 10a zieht Gasmoleküle aus dem zu kondensierenden Abdampfgas F2 an. Die Kondensation des Abdampfgases F2 an den Flüssiggaströpfchen 10a ist aus den folgenden Gründen effektiver als eine Kondensation an der Aussenwand des Hochdruckwärmetauschers 13:
- Die Flüssiggaströpfchen sind bei -150°C unterkühlt, wodurch aufgrund der größeren Temperaturdifferenz ein höheres Potential zur Anziehung von Gasmolekülen des Abdampfgases F2 entsteht.
- Die spezifische Oberfläche eines Flüssiggaströpfchens ist grösser als die vergleichbare Oberfläche der Aussenwand des Hochdruckwärmetauschers 13, da die Fläche einer Kugel um Pi mal größer ist als die Fläche einer ebenen oder gekrümmten Oberfläche.

Die Figuren 2 und 3 zeigen weitere Ausführungsbeispiele von Brenngasversorgungssystemen 1, bei denen, im Unterschied zum Ausführungsbeispiel gemäss Figur 1, im Abdampfgasstrom, nach dem Austreten des Abdampfgases F2 aus dem LNG-Tank 3, ein Wärmetauscher 8 angeordnet ist, der dazu dient das Hochdruckflüssiggas nach der Hochdruckpumpe 5 und vor dem Eintritt in den Kondensationskerngenerator 10 weiter abzukühlen. Dadurch wird das in der Fluidleitung 15a, 15b strömende Abdampfgas F2 im Wärmetauscher 8 erwärmt. Der Wärmetauscher 8 wird vorzugsweise von einem Seitenstrom 18a des Hochdruckflüssiggases versorg, wobei der Seitenstrom 18a der Hochdruckpumpe 5 oder stromabwärts der Hochdruckpumpe 5 aus der Hochdruckfluidleitung 17a entnommen wird, dem Wärmetauscher 8 zugeleitet wird, und nachfolgend vorzugsweise dem Kondensationskerngenerator 10 zugeleitet wird. Der Wärmetauscher 8 ist vorzugsweise wie in Figur 2 dargestellt, flussaufwärts des Verdichters 9 angeordnet.

Für das erfindungsgemässe Brenngasversorgungssystem 1 ist es wichtig, dass die in Figur 6 dargestellte Kondensation des dem Kondensator 6 zugeführten Abdampfgases F2 im Innenraum 6d des Kondensators 6 vorzugsweise möglichst energieeffizient abläuft. Es ist einem Fachmann allgemeint bekannt, dass das in den Figuren 1 bis 5 dargestellte Brenngasversorgungssystem 1 eine nicht dargestellte Ansteuervorrichtung sowie eine Mehrzahl von Signalleitungen, zum Beispiel zum Ansteuern der Niederdruckpumpe 4, der Hochdruckpumpe 5, dem Verdichter 9, und der Ventile 25a bis 25 g umfasst, und einer Mehrzahl von Signalleitungen sowie Sensoren umfasst, zum Beispiel zum Erfassen von Druck und / oder Temperatur an unterschiedlichsten Stellen des durch das Brenngasversorgungssystems 1 strömenden Flüssiggases F1 und Abdampfgases F2, sowie von Hochdruckflüssiggas und Hochdruckbrenngas. Es ist für einen Fachmann auf Grund der vorliegenden Offenbarung daher auf einfache Weise nachvollziehbar, welche Ansteuerungsmöglichkeiten und welche Parameteroptimierungen das erfindungsgemässe Brenngasversorgungssystem 1 bietet, um das erfindungsgemässe Brenngasversorgungssystem 1 vorteilhaft zu betreiben, und um insbesondere sicherzustellen, dass die Kondensation im Kondensator 6 vorteilhaft, vorzugsweise energieeffizient abläuft. So kann beispielsweise aus Figur 1 auf einfache Weise abgeleitet werden, dass die Kondensation das Abdampfgases F2 im Kondensator 6 über die vom Verdichter 9 geförderte Fördermenge an Abdampfgas F2, und allenfalls zudem dessen Temperatur, und/oder über die durch den Seitenstrom 18a, 18b dem Kondensationskerngenerator 10 zugeführte Fördermenge an Hochdruckflüssiggas, und insbesondere auch dessen Temperatur, und/oder durch die vom Kondensationskerngenerator 10 erzeugte Grösse und Menge an Kondensationskernen 10a, und/oder die Anordnung und Ausrichtung des Stroms der Flüssiggaströpfchen 10a im Innenraum 6d des Kondensators 6 und/oder die Anordnung und Ausgestaltung des Hochdruckwärmetauschers 13 im Innenraum 6d des Kondensators 6 beeinflusst werden kann. Zudem kann durch die Verwendung und geschickte Anordnung und Auslegung eines in den Figuren 2 bis 5 dargestellten Wärmetauscher 8 die Temperatur der in den Innenraum 6d eingesprühten Flüssigkeitströpfchen 10a, und/oder die Temperaturdifferenz von eingeleitetem Abdampfgas F2 und Flüssigkeitströpfchen 10a beeinflusst werden. Daher ist es einem Fachmann, ausgehend von dem hiermit offenbarten Erfindungsgedanken, auf Grund seines Fachwissens auf einfache Weise möglich, Verfahrensparameter derart zu wählen, dass das Brenngasversorgungssystem wirtschaftlich vorteilhaft, und insbesondere energieeffizient betreibbar ist, und dass insbesondere das im Kondensator 6 ablaufende Kondensationsverfahren eine hohe Kondensationsrate aufweist.

Figur 3 zeigt in einer weitere Ausführungsvariante einen Gasspeicherbehälter 14, der über ansteuerbare Ventile 25d, 25e mit den Gasleitungen 15a, 15c verbunden ist. Dieser Gasspeicherbehälter 14 dient zur Aufnahme von Abdampfgas F2, insbesondere in Zeitperioden, während welchen der Hochdruck-Gaseinspritzmotor 2 keinen Brennstoff benötigt, beispielsweise weil das Handelsschiff still steht. Während einer solchen Zeitperiode wird dem Hochdruck-Gaseinspritzmotor 2 kein Hochdruckflüssiggas zugeleitet, sodass der Hochdruckflüssiggas im Wärmetauscher 13 im Kondensator 6 nicht als Wärmesenke dienen kann, und daher im Kondensator 6 keine Kühlung stattfindet, sodass die Kondensation im Kondensator 6 zum Erliegen kommt. Währen des Stillstandes des Handelsschiffes fällt im LNG-Tank 3 jedoch trotzdem Abdampfgas F2 an, das aus dem LNG-Tank 3 abgeführt werden muss, um einen unzulässigen Druckanstieg im LNG-Tank 3 zu verhindern. Der Gasspeicherbehälter 14 ist insbesondere während solchen Zeitperioden von Vorteil, weil das Abdampfgas F2 über den Verdichter 9 in den Gasspeicherbehälter 14 gefördert werden kann, dort zwischengespeichert werden kann, und anschliessend während einer Fahrt des Handelsschiffes, beziehungsweise während dem Zuführen von Hochdruckflüssiggas an den Hochdruck-Gaseinspritzmotor 2, dem Gasspeicherbehälter 14 entnommen und im Kondensator 6 verflüssigt werden kann.

Der Gasspeicherbehälter 14 ist vorteilhafterweise mit einem hochporösen Feststoff (bspw. Adsorbens oder Metallhydrid) oder einem flüssigen Lösungsmittel gefüllt, wodurch sich die Speicherkapazität des Gasspeicherbehälters 14, gegenüber der eines leeren Behälters, bei gleichem Druck und Temperatur beträchtlich erhöht. Ist der Gasspeicherbehälter 14 nicht im Speicherbetrieb oder wird er entleert, so ist der Gasspeicherbehälter 14 mit der Saugleitung 15b des Verdichters 9 verbunden, indem das Ventil 25d geöffnet ist und das Ventil 25e geschlossen ist. Ist der Gasspeicherbehälter 14 im Speicherbetrieb, so ist er mit der Druckleitung 15c stromabwärts des Verdichters 9 verbunden, indem das Ventil 25e geöffnet, und das Ventil 25d geschlossen ist. Es kann sich zudem als vorteilhaft erweisen zumindest ein Teil das Abdampfgases F2 über eine Fluidleitung 15e einem Niederdruckverbraucher 11 zuzuleiten, wobei vorzugsweise ein ansteuerbares Ventil 25c und vorzugsweise zudem ein ansteuerbares Ventil 25b vorgesehen sind, um den Gasfluss zum Niederdruckverbraucher 11 anzusteuern, und um allenfalls eine Aufteilung der Gasmengen zwischen Kondensator 6 und Niederdruckverbraucher 11 anzusteuern.

Es kann sich zudem als vorteilhaft erweisen das aus dem Innenraum 6d des Kondensators 6 über die Rückführleitung 21 ausströmende Flüssiggas F1 ansteuerbar über ein Ventil 25f der Hochdruckpumpe 5 und/oder über ein Ventil 25g dem LNG-Tank 3 zuzuführen.

Figur 4 zeigt ein weiteres Ausführungsbeispiel eines Brenngasversorgungssystems 1, bei welchem das Abdampfgas F2 nach dem Tank 3 dem Wärmetauscher 8 zugeführt wird, anschliessend im Verdichter 9 zu verdichtetem Abdampfgas F2 komprimiert wird, wobei dieses verdichtete Abdampfgas F2 wiederum dem Wärmetauscher 8 zugeführt wird, sodass das verdichtete Abdampfgas F2 im Wärmetauscher 8 stark abgekühlt wird, und derart abgekühlt über die Einleitung 15d dem Kondensator 6 zugeführt wird. Dieses komprimierte und stark abgekühlte Abdampfgas F2 weist den Vorteil auf, dass dieses Abdampfgas F2 im Kondensator 6 besser bzw. einfacher und dadurch energieeffizienter kondensiert.

Figur 5 zeigt ein weiteres Ausführungsbeispiel eines Brenngasversorgungssystems 1, welches im Unterschied zu dem in Figur 3 dargestellten Ausführungsbeispiel zwei separate Hochdruckpumpen 5, nämlich eine erste Hochdruckpumpe 5a und eine zweite Hochdruckpumpe 5b, sowie daran anschliessend zwei separate Hochdruckfluidleitungen 17a, 17c aufweist. Zudem weist das Ausführungsbeispiel gemäss Figur 5, im Unterschied zum Ausführungsbeispiel gemäss Figur 3, in der Rückführleitung 21 kein Ventil 25g, und somit keine Rückführung in den Tank 3 auf. Das Ausführungsbeispiel gemäss Figur 5 wird vorzugsweise derart betrieben, dass nur der ersten Hochdruckpumpe 5a Flüssiggas F1 aus dem Tank 3 zugeleitet wird und in der ersten Hochdruckpumpe 5a zu Hochdruckflüssiggas verdichtet wird. Dieses Hochdruckflüssiggas wird, wie in Figur 5 dargestellt, dem Hochdruckwärmetauscher 13 und anschliessend dem Hochdruckverdampfer 7 zugeleitet. In einem vorteilhaften Verfahren wird der zweiten Hochdruckpumpe 5b das sich im Kondensator 6 befindliche Flüssiggas F1, im Wesentlichen ein Kondensat, zugeführt, und in der zweiten Hochdruckpumpe 5b zu Hochdruckflüssiggas verdichtet, wobei dieses, unter Umgehung des Kondensators 6, in die Hochdruckfluidleitung 17b und/oder direkt in den Hochdruckverdampfer 7 eingespeist wird. Diese Anordnung bzw. dieses Verfahren weist den Vorteil auf, dass das aus dem Tank 3 abgeführte Flüssiggas F1 nicht durch im Kondensator 6 erzeugtes Kondensat bzw. Flüssiggas F1, und in die Niederdruckfluidleitung 16a rückgespeistes Flüssiggas F1 erwärmt wird. Diese Ausführungsform weist daher den Vorteil auf, dass die Kondensation im Kondensator 6 eine höhere Effizient bzw. einen höheren Wirkungsgrad aufweist. In einem weiteren möglichen Verfahren kann der zweiten Hochdruckpumpe 5b entweder über das Ventil 25f nur Kondensat bzw. Flüssiggas F1 aus dem Kondensator 6 zugeleitet werden, oder über das Ventil 25g nur Flüssiggas F1 aus dem Tank 3 zugeführt werden, oder durch eine entsprechende Ansteuerung beider Ventile 25f, 25g eine Mischung umfassen einen Anteil Füssiggas F1 aus dem Kondensator 6 und einen Anteil Flüssiggas F1 aus dem Tank 3. Das Mischverhältnis dieser beiden Anteile Flüssiggase F1 kann, abhängig vom jeweiligen Betriebspunkt des Brenngasversorgungssystems 1, variiert werden, beispielsweise um den Wirkungsgrad des Brenngasversorgungssystems 1 zu optimieren, beispielsweise abhängig von der vom Hochdruck-Gaseinspritzmotor 2 angeforderten Menge an Hochdruckbrenngas.

## Patentansprüche

1. Brenngasversorgungssystem (1) zum Versorgen eines Hochdruck-Gaseinspritzmotors (2) mit in einem Flüssiggastank (3), insbesondere LNG-Tank, gespeicherten Gas, umfassend einen Kondensator (6), umfassend einen Verdichter (9), der Fluid leitend mit dem Flüssiggastank (3) verbindbar ist, um Abdampfgas (F2) aus dem Flüssiggastank (3) zuzuführen, wobei der Verdichter (9) stromabwärts über eine Einleitung (15d) Fluid leitend mit einem Innenraum (6d) des Kondensators (6) verbunden ist, um das Abdampfgas (F2) in den Innenraum (6d) einzuleiten, sowie umfassend einen Kondensationskerngenerator (10), wobei der Kondensationskerngenerator (10) derart ausgestaltet ist, dass dieser Flüssiggaströpfchen (10a) erzeugt, die als Kondensationskerne dienen, wobei der Kondensationskerngenerator (10) die Kondensationskerne in den Innenraum (6d) einführt, um über die Kondensationskerne eine Kondensation des eingeleiteten Abdampfgases (F2) zu fördern, sodass sich daraus Flüssiggas (F1) ausbildet, und wobei das sich im Kondensator (6) gebildete Flüssiggas (F1) dem Flüssiggastank (3) zugeleitet werden kann, wobei das System weiterhin eine Hochdruckpumpe (5) umfasst, welche Fluid leitend mit dem Flüssiggastank (3) verbindbar ist, um Flüssiggas (F1) aus dem Flüssiggastank (3) zuzuführen und dieses zu einem Hochdruckflüssiggas zu verdichten, wobei in dem Kondensator (6) ein Hochdruckwärmetauscher (13) angeordnet ist, wobei ein Hochdruckverdampfer (7) bereitgestellt ist, der über den Hochdruckwärmetauscher (13) Fluid leitend mit der Hochdruckpumpe (5) verbunden und stromabwärts des Kondensators (6) angeordnet ist, wobei der Hochdruckverdampfer (7) das Hochdruckflüssiggas in ein Hochdruckbrenngas wandelt und das Hochdruckbrenngas nach dem Hochdruckverdampfer (7) dem Hochdruck-Gaseinspritzmotor (2) zugeleitet ist, und wobei der Kondensationskerngenerator (10) stromaufwärts Fluid leitend mit der Hochdruckpumpe (5) verbunden ist, wobei das sich im Kondensator (6) gebildete Flüssiggas (F1) zusätzlich der Hochdruckpumpe (5) zugeleitet ist, wobei der Kondensationskerngenerator (10) derart ausgestaltet ist, dass dieser aus dem Hochdruckflüssiggas Flüssiggaströpfchen (10a) erzeugt, die als Kondensationskerne dienen.

2. Brenngasversorgungssystem (1) nach Anspruch 1, **dadurch gekennzeichnet, dass** stromaufwärts des Verdichters (9) ein Wärmetauscher (8) angeordnet ist, welcher mit dem zugeleiteten Abdampfgas (F2) Wärme austauscht, und dass der Kondensationskerngenerator (10) stromaufwärts Fluid leitend mit dem Wärmetauscher (8) und nachfolgend mit der Hochdruckpumpe (5) verbunden ist, damit der Wärmetauscher (8) Wärme mit dem zugeleiteten Hochdruckflüssiggas austauscht.

3. Brenngasversorgungssystem (1) nach Anspruch 1, **dadurch gekennzeichnet, dass** stromaufwärts des Verdichters (9) ein Wärmetauscher (8) angeordnet ist, welcher mit dem zugeleiteten Abdampfgas (F2) Wärme austauscht, und dass der Verdichter (9) stromaufwärts Fluid leitend wiederum mit dem Wärmetauscher (8) verbunden ist, damit der Wärmetauscher (8) Wärme mit dem durch den Verdichter (9) verdichteten Abdampfgas (F2) austauscht.

4. Brenngasversorgungssystem (1) nach einem der vorhergehenden Ansprüche, **dadurch gekennzeichnet, dass** die Einleitung (15d) das Abdampfgases (F2) von Oben in den Kondensator (6) erfolgt, dass sich der Hochdruckwärmetauscher (13) in vertikaler Richtung innerhalb des Kondensators (6) erstreckt, und dass der Hochdruckwärmetauscher (13) derart angeordnet ist, dass das Hochdruckflüssiggas in Hochdruckwärmetauscher (13) von unten nach oben strömt.

5. Brenngasversorgungssystem (1) nach einem der vorhergehenden Ansprüche, **dadurch gekennzeichnet, dass** der Kondensationskerngenerator (10) wenigstens eine Hockdruckdüse aufweist, bevorzugt eine Hochdruckdüse mit Düsendurchmesser im Bereich von 1 bis 1000 µm, besonders bevorzugt 5 bis 500 µm.

6. Brenngasversorgungssystem (1) nach einem der vorhergehenden Ansprüche, **dadurch gekennzeichnet, dass** der Kondensationskerngenerator (10) derart angeordnet ist, dass vom Kondensationskerngenerator (10) erzeugte Kondensationskerne (10a) in einem Kondensationsabschnitt (6a) in den Innenraum (6d) des Kondensators (6) eingeleitet sind, in welchem der Innenraum (6d) eine Kondensationstemperatur aufweist, wobei vorzugsweise der Kondensationskerngenerator (10) derart angeordnet ist, dass die Kondensationskerne in einer in Flussrichtung des Flüssiggases (F1) ersten Hälfte, bevorzugt einem in Flussrichtung des Flüssiggases (F1) ersten Drittel der Kühlleitung des Hochdruckwärmetauschers (13) in den Innenraum (6d) des Kondensators (6) eintreten.

7. Brenngasversorgungssystem (1) nach einem der vorhergehenden Ansprüche, **dadurch gekennzeichnet, dass** stromabwärts des Flüssiggastanks (3) ein Speicherbehälter (14) zum Zwischenspeichern von Abdampfgas (F2) angeordnet ist.

8. Brenngasversorgungssystem (1) nach einem der vorhergehenden Ansprüche, **dadurch gekennzeichnet, dass** die Hochdruckpumpe (5) zumindest eine erste Hochdruckpumpe (5a) und eine zweite Hochdruckpumpe (5b) umfasst, wobei die erste Hochdruckpumpe (5a) Fluid leitend mit dem Kondensationskerngenerator (10) und Fluid leitend über den Hochdruckwärmetauscher (13) mit dem Hochdruckverdampfer (7) verbunden ist, und wobei die zweite Hochdruckpumpe (5b) unter Umgehung des Hochdruckwärmetauschers (13) Fluid leitend mit dem Hochdruckverdampfer (7) verbunden ist.

9. Brenngasversorgungssystem (1) nach Anspruch 8, **dadurch gekennzeichnet, dass** die erste Hochdruckpumpe (5a) Fluid leitend mit dem Flüssiggastank (3) verbunden ist, um Flüssiggas (F1) zuzuführen, und dass die zweite Hochdruckpumpe (5b) Fluid leitend mit einem Auslass (6e) des Kondensators (6) verbunden ist, um der zweiten Hochdruckpumpe (5b) im Kondensator (6) angesammeltes Flüssiggas (F1) zuzuleiten.

10. Brenngasversorgungssystem (1) nach Anspruch 9, **dadurch gekennzeichnet, dass** die zweiten Hochdruckpumpe (5b) sowohl Fluid leiten mit dem Auslass (6e) des Kondensators (6) als auch Fluid leitend mit dem Flüssiggastank (3) verbunden ist, wobei Ventile (25f, 25g) vorgesehen sind, um den aus dem Kondensator (6) zugeführten Anteil Flüssiggas (F1) und den aus dem Flüssiggastank (3) zugeführten Anteil Flüssiggas (F1) anzusteuern.

11. Verfahren zum Versorgen eines Hochdruck-Gaseinspritzmotors (2) mit Gas, das in einem Flüssiggastank (3), insbesondere LNG-Tank, teilweise als Flüssiggas (F1) und teilweise als Abdampfgas (F2) gespeichert ist, indem das Abdampfgas (F2) aus dem Flüssiggastank (3) einem Verdichter (9) zugeführt und anschliessend in einen Kondensator (6) eingeleitet wird, wobei in einem Kondensationskerngenerator (10) ein Strom von Kondensationskernen in Form von Flüssiggaströpfchen erzeugt wird, welche im Kondensator (6) dem eingeleiteten Abdampfgas (F2) zugeleitet werden, um durch die Flüssiggaströpfchen eine Kondensation des Abdampfgases (F2) zu Flüssiggas (F1) zu fördern, und indem das im Kondensator (6) gebildete Flüssiggas (F1) dem Flüssiggastank (3) zugeleitet wird, wobei das Flüssiggas (F1) aus dem Flüssiggastank (3) einer Hochdruckpumpe (5) zugeführt wird und von dieser zu einem Hochdruckflüssiggas verdichtet wird, wobei das Hochdruckflüssiggas anschliessend einem in einem Kondensator (6) angeordneten Hochdruckwärmetauscher (13) und nachfolgend einem Hochdruckverdampfer (7) zugeführt wird, wobei das Hochdruckflüssiggas im Hochdruckverdampfer (7) in ein Hochdruckbrenngas umgewandelt wird, sodass ein unter Hochdruck stehendes Brenngas erzeugt wird, welches dem Hochdruck-Gaseinspritzmotor (2) zugeleitet wird, und wobei das im Kondensator (6) gebildete Flüssiggas (F1) der Hochdruckpumpe (5) zugeleitet und der Strom von Kondensationskernen in Form von Flüssiggaströpfchen aus Hochdruckflüssiggas erzeugt wird.

12. Verfahren nach Anspruch 11, wobei der im Kondensationskerngenerator (10) erzeugte Strom von Kondensationskernen in Form von Flüssiggaströpfchen, welcher im Kondensator (6) dem eingeleiteten Abdampfgas (F2) zugeleitet wird, einen Massenstrom von 1 bis 5 % aufweist, ausgehend vom Massenstrom des zu kondensierenden Gases.

13. Verfahren nach einem der Ansprüche 11 bis 12, **dadurch gekennzeichnet, dass** im Innenraum (6d) des Kondensators (6) ein Kondensationsabschnitt (6a) erzeugt wird, innerhalb welchem das Abdampfgas (F2) eine Temperatur aufweist, welche unterhalb der Verdampfungstemperatur des Flüssiggases (F1) liegt, und dass in diesen Kondensationsabschnitt (6a) Kondensationskerne in Form von unterkühlten Flüssiggaströpfchen (10a) eingesprüht werden.

14. Verfahren nach einem der Ansprüche 11 bis 13, **dadurch gekennzeichnet, dass** aus oder nach der Hochdruckpumpe (5) ein Seitenstrom von Hochdruckflüssiggas entnommen wird, dass dieser Seitenstrom in einem Wärmetauscher (8) gekühlt wird, dass im Wärmetauscher (8) zugleich aus dem Flüssiggastank (3) abgeleitetes Abdampfgas (F2) erwärmt wird, dass das Abdampfgas (F2) nach dem Wärmetauscher (8) dem Kondensator (6) zugeleitet wird, und dass das Hochdruckflüssiggas nach dem Wärmetauscher (8) dem Kondensationskerngenerator (10) zugeleitet wird**.**

15. Handelsschiff umfassend eine Brenngasversorgungssystem 1 nach einem der Ansprüche 1 bis 10.

## Claims

1. Fuel gas supply system (1) for supplying a high-pressure gas injection engine (2) with gas stored in a liquefied gas tank (3), in particular an LNG tank, comprising a condenser (6) comprising a compressor (9) which is fluid-conductively connectable to the liquid gas tank (3) to supply boil-off gas (F2) from the liquefied gas tank (3), the compressor (9) being fluid-conductively connected downstream via an inlet (15d) to an inner space (6d) of the condenser (6) to introduce the boil-off gas (F2) into the inner space (6d), and comprising a condensation nucleus generator (10), wherein the condensation nucleus generator (10) is configured such in that it generates liquid gas droplets (10a), which droplets serve as condensation nuclei, the condensation nucleus generator (10) introducing the condensation nuclei into the inner space (6d) in order to promote condensation of the introduced boil-off gas (F2) via the condensation nuclei, so that liquefied gas (F1) is formed therefrom, and wherein the liquefied gas (F1) formed in the condenser (6) may be fed to the liquefied gas tank (3), wherein the system furthermore comprises a high-pressure pump (5) which can be connected in a fluid-conducting manner to the liquefied gas tank (3) in order to supply liquefied gas (F1) from the liquefied gas tank (3) and to compress it to a high-pressure liquefied gas, wherein in the condenser (6) a high-pressure heat exchanger (13) is arranged, wherein a high-pressure evaporator (7) is provided which is fluid-conductively connected to the high-pressure pump (5) via the high-pressure heat exchanger (13) and is arranged downstream of the condenser (6), wherein the high-pressure evaporator (7) converts the high-pressure liquid gas into a high-pressure fuel gas, and the high-pressure fuel gas is supplied to the high-pressure gas injection engine (2) downstream of the high-pressure evaporator (7), and wherein the condensation nucleus generator (10) is fluid-conductively connected upstream to the high-pressure pump (5), wherein the liquefied gas (F1) formed in the condenser (6) is additionally fed to the high-pressure pump (5), wherein the condensation nucleus generator (10) is designed such that it generates liquid gas droplets (10a) from the high-pressure liquid gas, which serve as condensation nuclei.

2. Fuel gas supply system (1) according to claim 1, **characterized in that** a heat exchanger (8) is arranged upstream of the compressor (9), which exchanges heat with the supplied boil-off gas (F2), and **in that** the condensation nucleus generator (10) is fluid-conductively connected upstream to the heat exchanger (8) and subsequently to the high-pressure pump (5) in order for the heat exchanger (8) to exchange heat with the supplied high-pressure liquid gas.

3. Fuel gas supply system (1) according to claim 1, **characterized in that** a heat exchanger (8) is arranged upstream of the compressor (9), which exchanges heat with the supplied boil-off gas (F2), and **in that** the compressor (9) is fluid-conductively connected upstream in turn to the heat exchanger (8) in order for the heat exchanger (8) to exchange heat with the boil-off gas (F2) compressed by the compressor (9).

4. Fuel gas supply system (1) according to any one of the preceding claims, **characterized in that** the inlet (15d) of the boil-off gas (F2) is from above into the condenser (6), that the high-pressure heat exchanger (13) extends in vertical direction inside the condenser (6), and that the high-pressure heat exchanger (13) is arranged in such a way that the high-pressure liquid gas flows in high-pressure heat exchanger (13) from bottom to top.

5. Fuel gas supply system (1) according to one of the preceding claims, **characterized in that** the condensation nucleus generator (10) has at least one high-pressure nozzle, preferably a high-pressure nozzle with a nozzle diameter in the range from 1 to 1000 µm, particularly preferably 5 to 500 µm.

6. Fuel gas supply system (1) according to any one of the preceding claims, **characterized in that** the condensation nucleus generator (10) is arranged such that condensation nuclei (10a) generated by the condensation nucleus generator (10) are introduced into a condensation section (6a) in the inner space (6d) of the condenser (6) in which the inner space (6d) has a condensation temperature, wherein preferably the condensation nucleus generator (10) is arranged in such a way that the condensation nuclei enter the inner space (6d) of the condenser (6), in the flow direction of the liquid gas (F1), in a first half, preferably a first third of the cooling line of the high-pressure heat exchanger (13).

7. Fuel gas supply system (1) according to any one of the preceding claims, **characterized in that** a storage tank (14) for intermediate storage of boil-off gas (F2) is arranged downstream of the liquefied gas tank (3).

8. Fuel gas supply system (1) according to one of the preceding claims, **characterized in that** the high pressure pump (5) comprises at least a first high pressure pump (5a) and a second high pressure pump (5b), wherein the first high-pressure pump (5a) is fluid-conductively connected to the condensation nucleus generator (10) and fluid-conductively connected to the high-pressure evaporator (7) via the high-pressure heat exchanger (13), and wherein the second high-pressure pump (5b) is fluid-conductively connected to the high-pressure evaporator (7), bypassing the high-pressure heat exchanger (13).

9. The fuel gas supply system (1) according to claim 8, **characterized in that** the first high-pressure pump (5a) is fluid-conductively connected to the liquefied gas tank (3) to supply liquefied gas (F1), and that the second high-pressure pump (5b) is fluid-conductively connected to an outlet (6e) of the condenser (6) to supply liquefied gas (F1) accumulated in the condenser (6) to the second high-pressure pump (5b).

10. Fuel gas supply system (1) according to claim 9, **characterized in that** the second high-pressure pump (5b) is both fluid-conductingly connected to the outlet (6e) of the condenser (6) and fluid-conductingly connected to the liquefied gas tank (3), wherein valves (25f, 25g) are provided to control the portion of liquefied gas (F1) supplied from the condenser (6) and the portion of liquefied gas (F1) supplied from the liquefied gas tank (3).

11. Method for supplying a high-pressure gas injection engine (2) with gas which is stored in a liquefied gas tank (3), in particular an LNG tank, partly as liquefied gas (F1) and partly as evaporated gas (F2), by feeding the boil-off gas (F2) from the liquefied gas tank (3) to a compressor (9) and then introducing it into a condenser (6), wherein a stream of condensation nuclei in the form of liquefied gas droplets is generated in a condensation nucleus generator (10), which nuclei are fed in the condenser (6) to the introduced boil-off gas (F2) in order to promote condensation of the boil-off gas (F2) to liquefied gas (F1) by the liquefied gas droplets, and wherein the liquefied gas (F1) formed in the condenser (6) is fed to the liquefied gas tank (3), wherein the liquefied gas (F1) is fed from the liquefied gas tank (3) to a high-pressure pump (5) and is compressed by the latter to a high-pressure liquefied gas, wherein the high-pressure liquid gas is then fed to a high-pressure heat exchanger (13) arranged in a condenser (6) and subsequently to a high-pressure evaporator (7), wherein the high-pressure liquid gas is converted in the high-pressure evaporator (7) into a high-pressure fuel gas, so that a fuel gas under high pressure is produced which is fed to the high-pressure gas injection engine (2), and wherein the liquefied gas (F1) formed in the condenser (6) is fed to the high-pressure pump (5), and the stream of condensation nuclei in form of liquid gas droplets is generated from the high-pressure liquid gas.

12. The method according to claim 11, wherein the stream of condensation nuclei in the form of liquid gas droplets generated in the condensation nucleus generator (10), which is fed in the condenser (6) to the introduced boil-off gas (F2), has a mass flow rate of 1 to 5%, based on the mass flow rate of the gas to be condensed.

13. Method according to any one of claims 11 to 12, **characterized in that** a condensation section (6a) is generated in the inner space (6d) of the condenser (6), within which the boil-off gas (F2) has a temperature which is below the boiling temperature of the liquid gas (F1), and **in that** condensation nuclei in the form of supercooled liquid gas droplets (10a) are sprayed into this condensation section (6a).

14. Method according to one of the claims 11 to 13, **characterized in that** a side stream of high-pressure liquid gas is withdrawn from or downstream of the high-pressure pump (5), **in that** this side stream is cooled in a heat exchanger (8), **in that** boil-off gas (F2) discharged from the liquefied gas tank (3) is simultaneously heated in the heat exchanger (8), **in that** the boil-off gas (F2) is fed to the condenser (6) downstream of the heat exchanger (8), and **in that** the high-pressure liquefied gas is fed to the condensation nucleus generator (10) downstream of the heat exchanger (8).

15. A merchant vessel comprising a fuel gas supply system 1 according to any one of claims 1 to 10.

## Revendications

1. Système d'alimentation en gaz combustible (1) destiné à alimenter un moteur à injection de gaz à haute pression (2) en gaz stocké dans un réservoir de gaz liquéfié (3), en particulier un réservoir de GNL, comprenant un condenseur (6) comprenant un compresseur (9) qui peut être relié de manière fluidique au réservoir de gaz liquéfié (3) afin d'alimenter le gaz de vapeur (F2) provenant du réservoir de gaz liquéfié (3), le compresseur (9) étant relié en aval par une conduite d'alimentation (15d) à un espace intérieur (6d) du condenseur (6) afin d'introduire le gaz de vapeur (F2) dans l'espace intérieur (6d), et comprenant un générateur de noyaux de condensation (10), le générateur de noyaux de condensation (10) étant conçu de telle sorte qu'il génère des gouttelettes de gaz liquéfié (10a) qui servent de noyaux de condensation, le générateur de noyaux de condensation (10) introduisant les noyaux de condensation dans l'espace intérieur (6d) afin de favoriser, par l'intermédiaire des noyaux de condensation, une condensation du gaz de vapeur introduit (F2), de sorte qu'il se forme à partir de celui-ci un gaz liquéfié (F1), et le gaz liquéfié (F1) formé dans le condenseur (6) pouvant être acheminé vers le réservoir de gaz liquéfié (3), le système comprenant en outre une pompe haute pression (5) qui peut être reliée de manière fluidique au réservoir de gaz liquéfié (3) afin d'acheminer le gaz liquéfié (F1) depuis le réservoir de gaz liquéfié (3) et le comprimer en un gaz liquéfié à haute pression, un échangeur de chaleur à haute pression (13) étant disposé dans le condenseur (6), un évaporateur à haute pression (7) étant prévu, qui est relié de manière fluidique à la pompe à haute pression (5) via l'échangeur de chaleur à haute pression (13) et est disposé en aval du condenseur (6), l'évaporateur haute pression (7) transformant le gaz liquéfié haute pression en un gaz combustible haute pression et le gaz combustible haute pression étant acheminé après l'évaporateur haute pression (7) vers le moteur à injection de gaz haute pression (2), et le générateur de noyau de condensation (10) étant relié en amont de manière fluidique à la pompe haute pression (5), le gaz liquéfié (F1) formé dans le condenseur (6) étant en outre acheminé vers la pompe haute pression (5), le générateur de noyaux de condensation (10) étant conçu de telle sorte qu'il produit à partir du gaz liquéfié haute pression des gouttelettes de gaz liquéfié (10a) qui servent de noyaux de condensation.

2. Système d'alimentation en gaz combustible (1) selon la revendication 1, **caractérisé en ce qu'**un échangeur de chaleur (8) est disposé en amont du compresseur (9), lequel échangeur de chaleur échange de la chaleur avec le gaz de vapeur acheminé (F2), et **en ce que** le générateur de noyaux de condensation (10) est relié en amont de manière à permettre le passage du fluide à l'échangeur de chaleur (8) et ensuite à la pompe haute pression (5), afin que l'échangeur de chaleur (8) échange de la chaleur avec le gaz liquéfié haute pression acheminé.

3. Système d'alimentation en gaz combustible (1) selon la revendication 1, **caractérisé en ce qu'**un échangeur de chaleur (8) est disposé en amont du compresseur (9), lequel échange de la chaleur avec le gaz de vapeur (F2), et **en ce que** le compresseur (9) est relié en amont de manière à permettre le passage du fluide à l'échangeur de chaleur (8) afin que l'échangeur de chaleur (8) échange de la chaleur avec le gaz de vapeur (F2) comprimé par le compresseur (9).

4. Système d'alimentation en gaz combustible (1) selon l'une des revendications précédentes, **caractérisé en ce que** l'introduction (15d) du gaz de vapeur (F2) s'effectue par le haut dans le condenseur (6), **en ce que** l'échangeur de chaleur haute pression (13) s'étend dans le sens vertical à l'intérieur du condenseur (6), et que l'échangeur de chaleur haute pression (13) est disposé de manière que le gaz liquéfié haute pression s'écoule de bas en haut dans l'échangeur de chaleur haute pression (13).

5. Système d'alimentation en gaz combustible (1) selon l'une des revendications précédentes, **caractérisé en ce que** le générateur de noyaux de condensation (10) comporte au moins une buse haute pression, de préférence une buse haute pression dont le diamètre est compris entre 1 et 1000 µm, de préférence entre 5 et 500 µm.

6. Système d'alimentation en gaz combustible (1) selon l'une des revendications précédentes, **caractérisé en ce que** le générateur de noyaux de condensation (10) est disposé de telle sorte que les noyaux de condensation (10a) générés par le générateur de noyaux de condensation (10) sont introduits dans une section de condensation (6a) dans l'espace intérieur (6d) du condenseur (6), dans lequel l'espace intérieur (6d) présente une température de condensation, le générateur de noyaux de condensation (10) étant de préférence disposé de telle sorte que les noyaux de condensation soient introduits dans une première moitié, de préférence dans un premier tiers de la conduite de refroidissement de l'échangeur de chaleur haute pression (13) dans la direction d'écoulement du gaz liquéfié (F1), dans l'espace intérieur (6d) du condenseur (6).

7. Système d'alimentation en gaz combustible (1) selon l'une des revendications précédentes, **caractérisé en ce qu'**un réservoir de stockage (14) destiné au stockage intermédiaire de gaz de vapeur (F2) est disposé en aval du réservoir de gaz liquéfié (3).

8. Système d'alimentation en gaz combustible (1) selon l'une des revendications précédentes, **caractérisé en ce que** la pompe haute pression (5) comprend au moins une première pompe haute pression (5a) et une deuxième pompe haute pression (5b), la première pompe haute pression (5a) étant reliée de manière fluidique au générateur de noyau de condensation (10) et de manière fluidique à l'évaporateur haute pression (7) via l' échangeur de chaleur haute pression (13), et la deuxième pompe haute pression (5b) étant reliée de manière fluidique à l'évaporateur haute pression (7) via l'échangeur de chaleur haute pression (13).

9. Système d'alimentation en gaz combustible (1) selon la revendication 8, **caractérisé en ce que** la première pompe haute pression (5a) est reliée de manière fluidique au réservoir de gaz liquéfié (3) afin d'alimenter en gaz liquéfié (F1), et **en ce que** la deuxième pompe haute pression (5b) est reliée de manière fluidique à une sortie (6e) du condenseur (6) afin d'alimenter la deuxième pompe haute pression (5b) en gaz liquéfié (F1) accumulé dans le condenseur (6).

10. Système d'alimentation en gaz combustible (1) selon la revendication 9, **caractérisé en ce que** la deuxième pompe haute pression (5b) est reliée à la sortie (6e) du condenseur (6) pour acheminer le fluide et est également reliée au réservoir de gaz liquéfié (3) pour acheminer le fluide, des vannes (25f, 25g) sont prévues pour commander la proportion de gaz liquéfié (F1) alimentée à partir du condenseur (6) et la proportion de gaz liquéfié (F1) alimentée à partir du réservoir de gaz liquéfié (3).

11. Procédé pour alimenter en gaz un moteur à injection de gaz à haute pression (2), lequel gaz est stocké dans un réservoir de gaz liquéfié (3), en particulier un réservoir de GNL, en partie sous forme de gaz liquéfié (F1) et en partie sous forme de gaz de vapeur (F2), le gaz de vapeur (F2) provenant du réservoir de gaz liquéfié (3) étant acheminé vers un compresseur (9), puis introduit dans un condenseur (6), un générateur de noyaux de condensation (10) produisant un flux de noyaux de condensation sous forme de gouttelettes de gaz liquéfié, qui sont acheminées dans le condenseur (6) vers le gaz vapeur introduit (F2) afin de favoriser, par les gouttelettes de gaz liquéfié, une condensation du gaz vapeur (F2) en gaz liquéfié (F1), et en acheminant le gaz liquéfié (F1) formé dans le condenseur (6) vers le réservoir de gaz liquéfié (3), le gaz liquéfié (F1) étant acheminé du réservoir de gaz liquéfié (3) vers une pompe haute pression (5) et est comprimé par celle-ci en un gaz liquéfié à haute pression, le gaz liquéfié à haute pression étant ensuite acheminé vers un échangeur de chaleur à haute pression (13) disposé dans un condenseur (6), puis vers un évaporateur à haute pression (7), le gaz liquéfié à haute pression étant transformé dans l'évaporateur à haute pression (7) en un gaz combustible à haute pression, de sorte qu'un gaz combustible sous haute pression est produit, lequel est acheminé vers le moteur à injection de gaz à haute pression (2), et le gaz liquéfié (F1) formé dans le condenseur (6) étant acheminé vers la pompe haute pression (5) et le flux de noyaux de condensation étant produit sous forme de gouttelettes de gaz liquéfié est formé à partir du gaz liquéfié à haute pression.

12. Procédé selon la revendication 11, dans lequel le flux de noyaux de condensation sous forme de gouttelettes de gaz liquéfié généré dans le générateur de noyaux de condensation (10), qui est acheminé vers le gaz de vapeur introduit (F2) dans le condenseur (6), présente un débit massique de 1 à 5 % par rapport au débit massique du gaz à condenser.

13. Procédé selon l'une des revendications 11 à 12, **caractérisé en ce qu'**une section de condensation (6a) est créée dans l'espace intérieur (6d) du condenseur (6), à l'intérieur de laquelle le gaz de vapeur (F2) présente une température inférieure à la température d'évaporation du gaz liquéfié (F1), et **en ce que** des noyaux de condensation sous-refroidis (10a) sous forme de gouttelettes de gaz liquéfié sont pulvérisés dans cette section de condensation (6a).

14. Procédé selon l'une des revendications 11 à 13, **caractérisé en ce qu'**un flux latéral de gaz liquéfié à haute pression est prélevé à partir ou après la pompe haute pression (5), **en ce que** ce flux latéral est refroidi dans un échangeur de chaleur (8), **en ce que**, dans l'échangeur de chaleur (8), le gaz vapeur (F2) dérivé du réservoir de gaz liquéfié (3) est aussi chauffé, que le gaz de vapeur (F2) est acheminé vers le condenseur (6) après l'échangeur de chaleur (8) et que le gaz liquéfié à haute pression est acheminé vers le générateur de noyau de condensation (10) après l'échangeur de chaleur (8).

15. Navire marchand comprenant un système d'alimentation en gaz combustible 1 selon l'une des revendications 1 à 10.
